# EUROPEAN PATENT SPECIFICATION

(11) **EP 4 285 193 B1**
(45) Date of publication and mention of the grant of the patent: **07.01.2026**
(21) Application number: 21708464.9
(22) Date of filing: 01.02.2021
(51) Int. Cl.: G05B 23/02

(54) **AUTOMATICALLY CONSTRUCTING A DIAGNOSTICS FAULT MODEL FROM VEHICLE ENGINEERING DOCUMENTATION**
AUTOMATISCHE ERSTELLUNG EINES DIAGNOSEFEHLERMODELLS AUS FAHRZEUGTECHNIKDOKUMENTATION
CONSTRUCTION AUTOMATIQUE D'UN MODÈLE DE DÉFAILLANCE DE DIAGNOSTIC À PARTIR DE DOCUMENTATION D'INGÉNIERIE DE VÉHICULE

(43) Date of publication of application: 06.12.2023
(73) Proprietor: Garrett Transportation I Inc., Torrance, CA 90504 (US); Bayerische Motoren Werke Aktiengesellschaft, 80809 München (DE)
(72) Inventor: UCHANSKI, Michael, Torrance, CA 90504 (US); SABBANI, Nagaraju, Torrance, CA 90504 (US); MRACEK, David, Torrance, CA 90504 (US); KLUCKA, Jaroslav, Torrance, CA 90504 (US); GRASREINER, Sebastian, 80809 München (DE); BRUMMER, Marc, 80809 München (DE)
(74) Representative: Ingrassia, Fisher & Lorenz UK Ltd.
(86) International application number: PCT/US2021/016051
(87) International publication number: WO 2022/164457

(56) References cited:
- US-A1- 2015 109 306

## Description

### BACKGROUND

Automotive technicians investigate potential vehicle faults by obtaining diagnostic trouble codes (DTCs) from the vehicle. However, as vehicle system complexity increases, the number of DTCs generated in a vehicle system has grown into the thousands. The historical practice of generating manual service plans for each of the thousands of DTCs that can be generated is burdensome and impractical. New and alternative approaches to handling DTCs are needed. Documents cited during prosecution include US 2015/109306 A1.

### OVERVIEW

The present inventors have recognized, among other things, that a problem to be solved is the need for new and/or alternative systems and methods for troubleshooting by the use of diagnostic trouble codes (DTCs) in the vehicle and/or automotive context. In some examples, system design documentation generated during the design process, such as by an original equipment manufacturer (OEM), is used to construct relationship chains linking together components, system design, and risk-related documentation to construct a troubleshooting tool. The relationship chains are then used to construct a troubleshooting tool. Quality system documentation that would generally be used by the OEM to monitor overall system design performance is used to generate tools for streamlined investigation of DTCs in an individual vehicle.

A first illustrative and non-limiting example takes the form of a method of providing a troubleshooting tool for identifying and resolving a system malfunction in a system having a communications network and an electrical network, comprising: creating, in a processor, a first mapping of communication system (CS) components, CS messages exchanged by the CS components, and CS signals carried by the messages; wherein at least one CS component is an electronic control unit (ECU) and at least one CS component is a communications bus coupling the ECU to additional CS components, further wherein the first mapping defines a plurality of CS symptoms and CS failure modes associated with the CS components, as well as an indication for each CS message of a source CS component that generates the CS message, a recipient CS component that receives the CS message, and each path CS component that the CS message would traverse when communicated by the source CS component to the recipient CS component; for the first mapping, the processor generating a plurality of relationship chains connecting each symptom to a source CS component, a recipient CS component, and identifying each path CS component linking the source CS component to a receiving CS component; creating a CS diagnostic trouble code (DTC) mapping a plurality of CS DTCs to the relationship chains; creating, in the processor, a second mapping of electrical system (ES) components, connections among the ES components, ES signals generated by the ES components for receipt by an ECU, and ES failure modes, ES symptoms, and ES corrective actions for addressing the ES failure modes and their resulting ES symptoms; for the second mapping, the processor generating a plurality of linkages associated a plurality of ES DTCs to individual ES symptoms and ES failure modes, and identifying which ECU would receive each ES DTC; aligning component names of the first mapping with the second mapping; generating, in the processor, a unified mapping of ES DTCs and CS DTCs to ES symptoms, CS symptoms, ES components, and CS components; and configuring the troubleshooting tool to perform as follows: receiving a set of reported error codes; using the unified mapping, identifying at least one system malfunction and associating the system malfunction with one or more identified system components; and reporting to a user the one or more identified system components on which the user may operate to resolve the system malfunction.

Additionally or alternatively, the step of the processor generating the plurality of relationship chains comprises matching information from the first mapping to data from a failure modes and effects analysis document for the system.

Additionally or alternatively, the method further comprises updating the failure modes and effects analysis document; in response to updating the failure modes and effects analysis document, updating at least one of the plurality of relationship chains; and in response to updating at least one of the plurality of relationship chains, regenerating the unified mapping.

Additionally or alternatively, the step of the processor generating the plurality of linkages comprises matching information from the second mapping to data from a failure modes and effects analysis document for the system.

Additionally or alternatively, the method further comprises updating the failure modes and effects analysis document; in response to updating the failure modes and effects analysis document, updating at least one of the plurality of linkages; and in response to updating at least one of the plurality of linkages, regenerating the unified mapping.

Additionally or alternatively, the CS messages are digital messages, and the ES signals are analog signals.

Additionally or alternatively, the step of identifying at least one system malfunction comprises identifying a first system malfunction, determining a subset of the received set of error codes not associated with the first system malfunction, and identifying a second system malfunction associated with the subset of the received set of error codes.

Additionally or alternatively, the step of identifying at least one system malfunction comprises identifying a list of potential system malfunctions, determining a test to be performed on the system that will aid in prioritizing the list of potential system malfunctions, and recommending the test be performed.

Additionally or alternatively, at least one DTC from either the CS or ES is associated with a result of the test.

Another illustrative, non-limiting example takes the form of a troubleshooting tool for a system, comprising: a processor and memory storing a unified mapping linking electrical subsystem (ES) components and communication subsystem (CS) components, connections among the ES components, connections among the CS components, failure modes associated with the ES and CS components, and diagnostic trouble codes (DTCs), the unified mapping having been generated using a first mapping comprising CS components, CS failure modes, CS symptoms, and CS DTCs, and a second mapping comprising ES components, ES failure modes, ES symptoms, and ES DTCs; wherein the processor is configured to: receive a set of DTCs; reference the unified mapping using the set of DTCs; and identify and report to a user a component failure related to the set of DTCs.

Additionally or alternatively, the processor is further configured to receive an input component failure mode and, in response thereto, to identify within the set of DTCs which DTCs relate to the input component failure mode.

Additionally or alternatively, the processor is further configured to: analyze the set of DTCs; determine whether any DTCs are not related to the input component failure mode; and if one or more of the DTCs in the set of DTCS are not related to the input component failure mode, identify at least one additional possible failure for any DTCs that do not relate to the identified failure.

Additionally or alternatively, the unified mapping is generated using a system failure modes and effects analysis (FMEA) document by linking the DTCs of each of the CS and ES components to failure modes identified in the FMEA document.

Additionally or alternatively, the processor is further configured identify and report to a user a component failure related to the set of DTCs by: identifying a first component failure associated with a first subset of the set of DTCs; identifying a second subset of the set of DTCs not associated with the first component failure; and identifying a second component failure associated with the second subset of the set of DTCs.

Additionally or alternatively, the processor is further configured identify and report to a user a component failure related to the set of DTCs by: identifying a list of potential failures based on the set of DTCs; determining a test to be performed on the system that will aid in prioritizing the list of potential failures; and recommending the test be performed. Additionally or alternatively, at least one test DTC from either the CS or ES is associated with a result of the test, and the processor is configured to add the at least one test DTC to the set of DTCs in response to a result of the test.

Additionally or alternatively, the system in any of the preceding examples is a vehicle.

Still further examples may take the forms of methods of troubleshooting or troubleshooting tools in which only one of the ES or CS as described above is used to generate the tool in accordance with the systems and methods recited, with or without consideration of other mechanical or electrical components of the underlying system.

Another illustrative, non-limiting example, takes the form of a method of managing a troubleshooting tool for a vehicle comprising updating a fault tree analysis or failure modes and effects analysis for the vehicle by adding or modifying at least one of a failure mode or an effect, and in response thereto, updating the troubleshooting tool to account for the added or modified failure mode or effect.

This overview is intended to introduce the subject matter of the present patent application. It is not intended to provide an exclusive or exhaustive explanation. The detailed description is included to provide further information about the present application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
Figure 1 shows in block form various elements of a vehicle control system;
Figure 2 shows an illustrative engine system;
Figure 3 is a chart of an illustrative communication system mapping;
Figure 4 illustrates a method of generating relationship chains for a communication system;
Figure 5 is a chart for an illustrative failure modes analysis;
Figure 6 illustrates a method of generating diagnostic linkages for an electrical system;
Figure 7 illustrates a method of generating a unified mapping for a communications system and an electrical system operating together;
Figures 8-10 illustrate methods of troubleshooting; and
Figure 11 illustrates a system to be analyzed.

### DETAILED DESCRIPTION

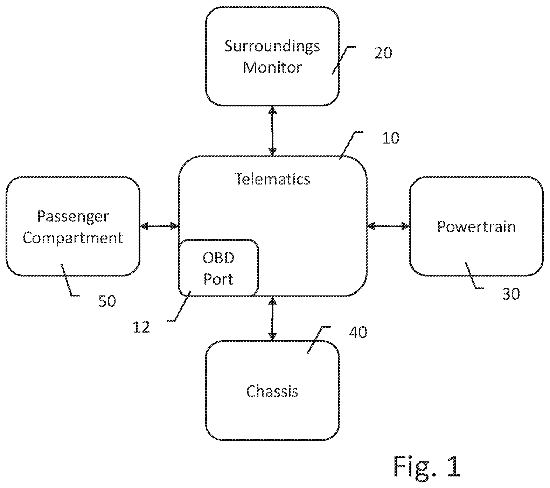

Figure 1 shows in block form various elements of a vehicle control system. The vehicle may be, for example and without limitation, a car, truck, train, airplane or boat. The illustrative system includes a telematics unit 10 which interfaces with several illustrative vehicle subsystems. A surroundings monitor subsystem (SMS) is shown at 20 and may include further subsystems such as, for example and without limitation, camera, LIDAR, and/or radar systems. The SMS may further include subsystems for driver assistance and/or autonomous control over the vehicle, if desired. A powertrain subsystem is shown at 30 and may include, for example and without limitation, additional subsystems for monitoring and controlling actions related to fuel, airflow, engine, and/or transmission. The powertrain subsystem 30 may incorporate an internal combustion engine (diesel, gasoline or other fuel), an electric motor, a hybrid combustion/electric system, or any other power generation system. A chassis subsystem is shown at 40 and may include, for example and without limitation, still further subsystems such as stability control, tire monitoring, steering, brake controls, etc. A passenger compartment subsystem may be included as shown at 50 and may include, for example and without limitation, infotainment, heating, ventilation and air conditioning (HVAC), comfort and passenger restraint subsystems. In some examples, each subsystem may have its own controller, such as by provision of an electronic control unit (ECU) in the form of a microcontroller, microprocessor, or state machine, along with associated memory for storing data and machine readable instruction sets in, for example, any suitable non-transitory media, and other circuitry as needed, such as logic or signal processing circuits, for example. An ECU may be referred to as an engine control unit for some subsystems.

The telematics unit 10 may include a microprocessor or microcontroller, or other control circuitry (such as a state machine), various logic circuitry, and a memory for storing operational instruction sets as well as for storing various data, as further detailed below. The telematics unit 10 may be operatively linked to an on-board diagnostics (OBD) port that a technician may plug into with an external diagnostics computer to download information from the system. Such a port may be a standardized or non-standard interconnection, such as using any of various OBD standard forms, USB, Ethernet, other electrical, optical coupling, or any other suitable coupling. Rather than a physical port 12, some systems may use a wireless connection (Bluetooth, WiFi, cellular 4G or 5G, etc.).

Interactions among these various blocks 10, 20, 30, 40, 50 may take place via wired or wireless connections, using one or more busses for example, and may include a range of different signal types. One solution in vehicles is the use of the Controller Area Network (CAN) Bus architecture. In an example, each CAN Bus node includes a central processor, a CAN controller, and a CAN transceiver as defined by ISO 11898 and its various subparts. The overall system, as well as each subsystem, may be designed and/or defined in accordance with electrical map(s) of electrical componentry and connections therebetween, as well as being designed and defined in accordance with communication map(s) that define senders and receivers of signals and lines or links among the senders and receivers. Several components may participate in each of "communication" and "electrical" networks and maps. Some discussion may be helpful to distinguish the two different maps and their contents.

The communications map (or mapping) defines the pathway for signals the primary function of which is to communicate information and commands, without substantially providing or consuming electrical power. Connections and signals in the communications mapping may be digital in nature, for example, defined by packets each including a plurality of digital zeros and ones communicated along a bus or other communication connection. The component connections to the bus or other interconnection in the communications mapping use high impedance inputs to limit current drain in the communications line or bus. Signals may include digitized representations of data or commands within the communication system. A typical communication packet may include a preamble, data, and a checksum, with the preamble identifying, for example, the source, data type, and length of the packet, the data containing digitized information or commands, and the checksum present for communication error checking using known methods.

The electrical mapping defines the pathways and signals between elements where the connected pathways and signals typically transmit power and generate, responsively, an action in the real world (movement of an actuator to close a valve, for example), or an output that can be recognized by a user (illumination of a screen, issuance of an audible signal). The electrical system may also obtain observations of the real world and/or parameters within the system, such as sensing a temperature, pressure, humidity, chemical, position, status, etc. to generate a signal representative of the observation. In these contexts, the electrical system is used to generate the output or obtain the observation which is then reported to a node of the communication system, where the observation may be sent to other nodes of the system through messages conveyed by the communication system.

As a specific example, one may consider a temperature sensor and an ECU to which the temperature sensor is coupled. The ECU can be a node on the CAN Bus. The temperature sensor obtains a power signal from a power source and therefore is part of the electrical map. The temperature sensor may obtain a temperature measurement and issue an analog output to the ECU. The ECU may convert the analog output from the temperature sensor to a digital signal and communicate the temperature measurement to other nodes of the system via the CAN Bus. In this configuration, the temperature sensor would reside only in the electrical mapping, as it consumes power and its output is an electrical output that is locally received and digitized by the ECU. The ECU would be in the electrical mapping (first because it receives the electrical signal from the temperature sensor, and second because it consumes power of its own right), and is also present in the communications mapping due to its coupling to the CAN bus and its communication of the converted, digitized temperature measurement to other parts of the system.

The present invention is not limited to the CAN Bus architecture, and its use is described for illustrative purposes. Some examples may incorporate more than one communication structure, standard or type, such as by having a CAN Bus coupling select subsystems, while one or more additional elements are including using, for example, an Ethernet connection. For example, a digital video camera may couple via Ethernet to one or more ECUs. The digital video camera would be part of the communication mapping when it communicates the digitized signals it captures on the Ethernet, and part of the electrical mapping when it obtains power to perform its image capture activities. Wireless connections, such as Bluetooth, WiFi, and/or cellular transmission capabilities may be included as well.

Placed in context, a vehicle system may generate a plurality of diagnostic trouble codes (DTCs) when errors occur. DTCs related to the electrical system are distinct from those of the communications system. A DTC in the communication system will be at least one layer of abstraction away from those of the electrical system. For example, a DTC in the communication system generally relates to a lack of information. Supposing a system having two ECU nodes, ECU-A and ECU-B, a DTC in the communication system generated by ECU-B may be "missing message from ECU-A," or "failure of checksum for message from ECU-A." The DTCs generated in the communication system aid in identifying which node or connection in the communication system is at fault. However, troubleshooting is limited as the root cause of the DTC cannot be discerned from the communication system alone.

The DCTs issued within the electrical system will present observations of what is happening, or not happening, within the electrical system. For example, an electrical system DTC may simply observe that an actuator did not open or close in response to a command to do so. If a communication system error is the actual fault, there may be many electrical DTCs generated without any indication of the true source of the issue. For example, a dozen actuators may be linked to electrical system DTCs in the event of a communication system error. Methods and systems that enable better triangulation of the actual error are desired. Integrating DTC and other data from both electrical and communications systems will be useful in this context.

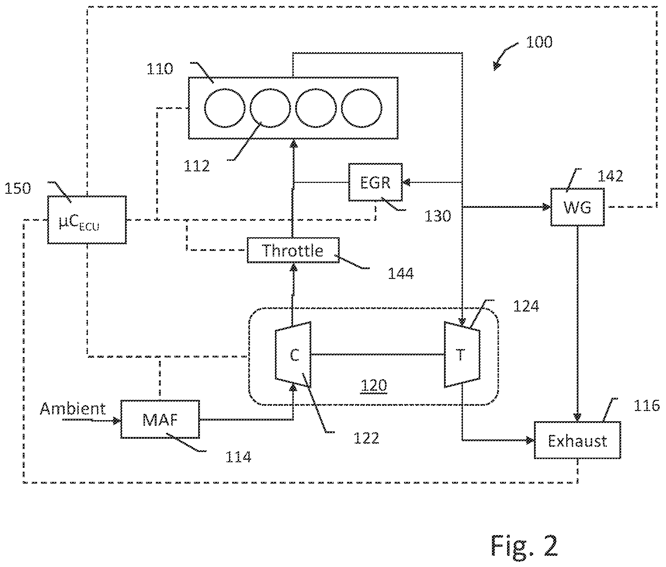

Figure 2 shows an illustrative engine and associated airflow system, and may be one of the subsystems within block 30 of Figure 1. The overall system is shown at 100, with an engine at 110 having a plurality of cylinders 112. Air going into the engine 110 is received through an air filter and (optionally) monitored by a mass air flow (MAF) sensor 114. Incoming air then flows to a compressor 122, which compresses the air to an increased pressure to improve engine power and efficiency. The air passes through a throttle 144 to the intake manifold of the engine 110. The compressor 122 is shown as part of a turbocharger 120, which also include a turbine 124 placed in the exhaust gas airstream coming out of the engine 110. The turbine 124 uses exhaust gas pressure to turn the compressor 122. A wastegate (WG) 142 is provided to bypass the turbine 124 by directing exhaust gasses to the exhaust 116, allowing regulation of the turbine 124 (and hence compressor 122) speed. The exhaust 116 may include exhaust treatment devices and one or more sensors to detect constituents of the exhaust gasses. An exhaust gas recirculation (EGR) valve is shown at 130 and may be used to supply exhaust gasses back to the engine input, useful to reduce certain emissions.

An airflow ECU is shown at 150 and indicated as a microcontroller. The airflow ECU 150 monitors and controls operations of the various elements shown, including controlling associated valves, and actuators, as well as obtaining readouts from numerous sensors in the system. For example, some sensors will detect conditions in the airstream (temperature, pressure, mass flow, presence of contaminants, etc.), and other sensors may be placed to observe whether various actuators are in fact working. In addition, the connections shown may include control lines. For example, connection to the WG 142 may include an electrical control connection to control an actuator that opens and closes the valve for the WG 142. More than one ECU may be present. For example, some systems may have a dedicated microcontroller for the turbocharger 120.

The ECU 150 can be seen as connected to the engine 110, the MAF sensor 114, the exhaust 116, the turbocharger 120, the EGR 130, the RCV 140, the WG 142, and the CAC 144. The connections shown would be part of the electrical map, while the airflow ECU 150 is also a node on the communications map, for example coupling in turn to a CAN Bus.

As can be appreciated, the signals passing back and forth within the system are subject to a variety of potential failures. For example, returning to the WG 142, when the airflow ECU 150 generates a control signal indicating that the WG 142 is to open, the airflow ECU 150 may observe whether the sensors associated with the WG 142 indicate changes to actuator position. The airflow ECU 150 may use a model of system airflow to characterize expected changes other operating characteristics (such as intake manifold air pressure, or exhaust 116 pressure/temperature), providing the ability to determine whether a requested change to WG 142 position results in desired or expected changes in operating characteristics. If the airflow ECU 150 does not receive a signal indicating direct observation of WG 142 position change, or does not observe expected effects of such an expected change, the airflow ECU 150 may generate one or more DTCs. It may be that an actuator failed, or a signal to the actuator was not received, or a sensor associated with the actuator failed to accurately detect actuation or other change, or a signal issued by the sensor was not issued or received. Each such failure may be the result of a different root cause. The airflow ECU 150, will generate one or more DTCs. The DTCs, as they relate to the components shown in Figure 2, including actions by those components and their connection to the airflow ECU 150 would be electrical DTCs. When the airflow ECU 150 communicates to other nodes of the communication system, any errors observed in such communications would appear as communication DTCs.

For maintenance purposes, the DTCs generated by each ECU in the vehicle are recorded over time by each subsystem. At the point of maintenance, these DTCs can be downloaded by a technician using a service tool plugged into the vehicle OBD port, or using over-the-air transmission. Historically, a technician would refer to a manual having descriptions of the DTCs and likely symptoms and causes, and would then use intuition and the manual to identify the likely root cause. Such a manual would contain instructions for DTC handling prepared for each DTC. As the systems in a vehicle become more complex, ever more DTCs are generated, with modern vehicles capable of generating thousands of DTCs. Further, a single vehicle fault can set off "cascades" of two, three or even dozens of DTCs. Manually generating service plans for these combinations of DTCs introduces further complication. Even with the use of electronic manuals, DTC code lookup and the preparation of manual-based instructions have become unwieldy. New and alternative approaches are desired.

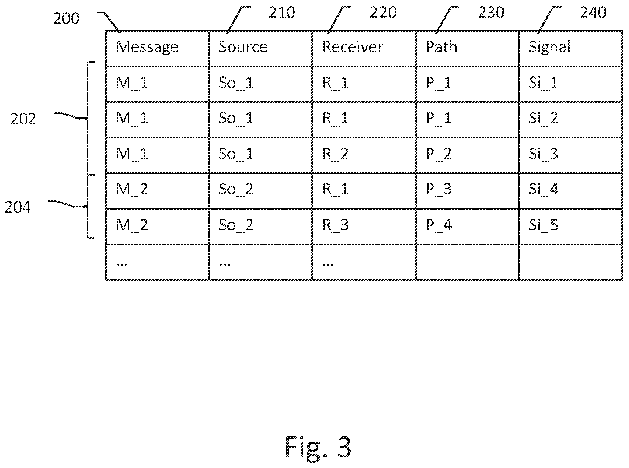

Figure 3 is a chart of an illustrative communication system mapping. The mapping in this example identifies a number of messages that can be sent within the communication system, listed at 200. Each message originates at a source 210, and is sent by the source 210 to one or more a receivers 220 along one or more paths 230. Each message contains content illustratively shown as one or more "signals" 240, as shown. Thus, for example, a communication message 202 may originate in at a first ECU (Source So_1), reflecting a measurement or measurements from one or more sensors operatively linked to the first ECU. The message M_1, at least in a CAN Bus example, can be received by each of several other nodes in the system, and may include one signal received used by several receiver 220 nodes, or more than one signal used by more than one of the other nodes. As an example, a vehicle system may include a temperature sensor to capture ambient temperature, and the output of the sensor is routed to a first ECU (So_1) and then distributed in a message to second and third receiver ECUs (R_1, R_2). For example, the ambient temperature signal may be received by a passenger compartment HVAC ECU and by an engine airflow ECU. Each path may be the same, or it may comprise different sections of the CAN Bus, or there may be paths on each of two different busses, or a message may pass through one path 230 via wireless connection and a second path 230 via wired connection. In a given system, there may be thousands of messages defined in the communication mapping, among dozens or more sources 210 and receivers 220, using a variety of paths 230 and a plurality of distinct signals 240.

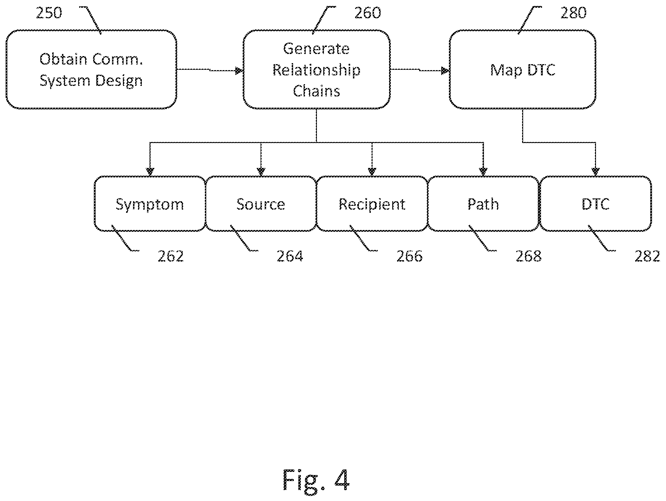

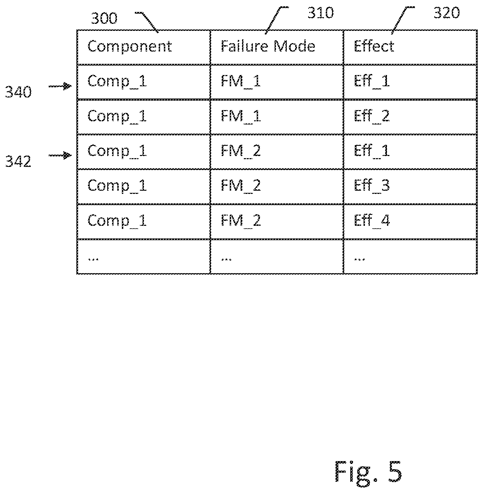

Figure 4 illustrates a method of generating relationship chains for a communication system. The method as shown would be performed primarily in a processor or computer environment, with human input used as needed to place the data inputs into format usable by the processor. In order to make the communication system mapping useable in a broader unified mapping, the methods and systems in some examples use a method as shown by Figure 4 to construct relationship chains. A communication system design is obtained at 250, including a mapping such as that shown in Figure 3. In addition, the communication system documentation is obtained, including a listing of failure modes and symptoms of each failure mode. The failure mode and symptom documentation may be a standard documentation associated with modern vehicle or other system design. For example, failure modes and symptoms for a system can be obtained from the Failure Modes and Effects Analysis (FMEA) or other design/risk documentation that is generated as part of most modern quality systems. An illustrative, simplified FMEA worksheet is shown in Figure 5.

Next, relationship chains are generated, as indicated at 260. Each relationship chain comprises a plurality of elements linking a symptom 262 to a message source 264, a message recipient 266, and a message path 268. The symptoms 262 are extracted from, for example, FMEA or other failure mode documentation for the system. These are then linked using the message signal knowledge obtained from the mapping in Figure 3 by matching one or more of the message identifiers, message names, or signals in messages, as reflected in the communication mapping.

Next the method includes mapping DTC data to the relationship chain encompassing the symptom 262, source 264, recipient 266 and path 268., as indicated at 280. The list of DTCs for the underlying system is obtained and integrated in step 280. DTC data can be linked by matching symptoms 262 to DTC descriptive information, for example. Human input may be used, for example, in block 280, to associate symptoms with DTCs to the extent necessary. As with several examples herein, system documentation that is built from the ground up using consistent language in both DTC and symptom descriptions can reduce or eliminate the need for human input.

A fault tree analysis (FTA) may also be used, either to populate the FMEA or as an additional quality system tool. The FTA is a top-down quality system analysis that begins with a high-level system state that is (generally) undesirable. Potential causes for the undesired system state are then listed down in a tree, generally using Boolean logic to identify combinations of low-level system faults that may lead to the high-level system failure. The FTA can be useful in helping generate the relationship chains both within the communication system, as well as later in the analysis below to link communication system failures and electrical systems failures. The FTA utilization is revisited below.

Figure 5 is a chart for an illustrative FMEA. The FMEA may be arranged, such as on a spreadsheet or any other suitable format, by component 300. Components 300 may be further organized according to subsystems or subassemblies, as desired. Each component 300 is linked to one or more failure modes 310, and one or more effects 320. The FMEA may be generated in separate parts for the communications system and for the electrical system.

For a communication system FMEA, a first ECU may be a component 300 and may have failure modes such as loss of connection, loss of power, etc. Each such failure mode may manifest in one or more distinct effects 320, such as failure to acknowledge a communication or generate an output communication.

For an electrical system FMEA, a valve may be a component 300, and may have failure modes 310 such as failure to open and failure to close. The failure modes may be more specifically defined, such as failure to open due to fouling, failure to open due to damaged fin, etc. Each failure mode 310 may manifest in one or more distinct effects 320, such as loss of power (causing user complaint), or increased emissions (potentially causing an emission sensor to identify an out-of-range reading).

It may be noted that two different failure modes may result in the same effect, as illustrated in lines 1 and 3 of the Figure. A single failure mode may result in more than one effect as well. Various other overlaps may occur. Each effect 320 may represent an event or non-conformity in the system. The "symptoms" noted in Figure 4 may each be associated with an effect 320.

The chart in Figure 5 omits several columns that may also be included in a FMEA document, such as ratings for likelihood, severity and/or detectability of each line, and any mitigations as well as the impact of such mitigations. For example, not all effects 320 may be readily observed and so, in some FMEA documents, each line can be further assessed for detectability. The FMEA document may be used various ways, including, for example and without limitation, in design, design validation, risk assessment, component qualification, continuous improvement and/or reliability monitoring. For example, field events (failures in actual use) can be monitored for rate of occurrence to determine trends, and may be compared to likelihood ratings to determine whether a system is performing in line with expectations as reflected by the FMEA and other quality system documents.

The FMEA documentation is built from the bottom-up, starting with components and then applying more broadly to the system. **In** use, the FMEA is typically used as a reference document in response to reported field events. The field events may be gathered, and the FMEA referenced to determine whether reported field events were known and likely events already documented in the FMEA, and further, trending data would be built from the FMEA and/or other risk assessment processes. However, the FMEA would not typically be integrated into the process of determining just what caused the field events.

Unexpected failures or other events may be added to a FMEA when they are observed. A corrective and preventive action (CAPA) may be launched in response to observation of actual performance that is not in keeping with the FMEA. While the FMEA is not the only procedure that would be relied upon in making determinations regarding reliability trends and/or CAPA decisions, it is typically reviewed and updated as part of these and other quality system procedures.

Some examples herein use the FMEA in a novel and distinct manner. **In** particular example, the FMEA and/or other design documentation is used to construct or generate a troubleshooting tool. **In** some examples, as the FMEA is updated over time, the resultant troubleshooting tools and unified mappings discussed herein may also be updated.

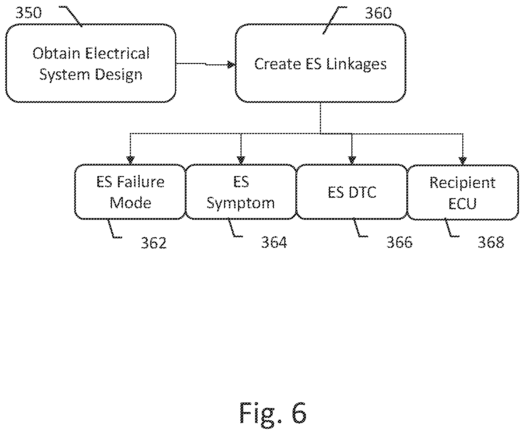

Figure 6 illustrates a method of generating diagnostic linkages for an electrical system. The method as shown would be performed primarily in a processor or computer environment, with human input used as needed to place the data inputs into format usable by the processor. This set of linkages is generated by starting with the electrical system design 350, which includes, in an example, a set of components in the electrical system (for example, controllers such as ECUs, sensors, actuators, buses (including the CAN bus), and associated pinouts for such components, harnesses with connectors and associated pinouts, and links defined at the level of connectors and wires. The electrical system design may include a wiring harness design artifact in a vehicle, for example.

The data is built into an electrical model for some or all of the electrical network of the vehicle or other system. The electrical model associates the standard symptoms and failure modes together using the FMEA. Corrective actions for each symptom and./or failure mode are then linked to the symptoms. Such corrective actions may often be defined based directly on the failure modes. For example, a symptom of failure to actuate may be associated with a failure mode of "loss of electrical connection to control signal", which would be corrected by fixing the lost electrical connection such as by replacing a cable or ensuring a cable connector is properly secured. A corrective action may be defined, for example, as replacing or servicing a component that has failed.

This set of data is then built into a set of electrical system linkages at 360. Each linkage connects a failure mode 362 to a symptom 364 and thence to an an electrical system DTC 366. An ECU (or other controller) 368 that would observe and store the DTC is identified for each linkage. The electrical system linkages 360 may incorporate the system level set of electrical DTCs, which are then parsed to associate each DTC 362 with a failure mode and symptom 364. Such parsing may be performed using a text identifier in order to automate a significant portion of the analysis.

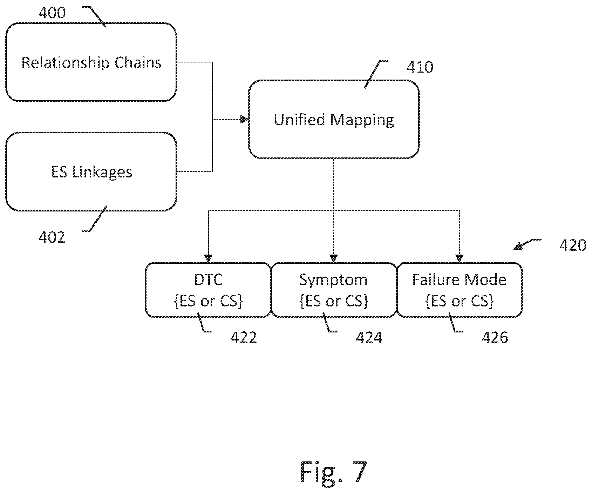

Figure 7 illustrates a method of generating a unified mapping for a communication system and an electrical system operating together. The method as shown would be performed primarily in a processor or computer environment, with human input used as needed to place the data inputs into format usable by the processor. Here, the unified mapping is generated at 410 taking as inputs the communications system (CS) relationship chains 400 from Figure 4, and the electrical system (ES) linkages 402 from Figure 6. The unified mapping 410 may be generated using a text parser, with or without human input to resolve uncertainties. The text parser may be configured to identify matching language among the names for components of each system. If CS and ES systems use consistent language to describe components, the text parser may automatically perform block 410; if there are differences among the system, human input may be used to resolve uncertainties as needed.

The resulting unified mapping 410 may comprise a plurality of associations as shown at 420. For each DTC 420, a list of associated symptoms 424 and failure modes 426 are identified in the unified mapping. In the unified mapping, each of ES and CS DTCs are accounted for in this example. One or more DTCs from either the CS or the ES may be omitted from the unified mapping, if it is desired to handle errors from such DTCs separately from the unified mapping approach. In the unified mapping, each failure mode 426 may also be mapped to the affected component.

This unified mapping at 410 is in contrast to the existing state of the art. In the existing state of the art, expert input is used to generate a corrective action plan for each DTC. That existing approach to DTC resolution is a top-down approach that is known to require a large amount of expert input and results in significant redundancy. By instead forming a bottom-up unified mapping 410, the expert input can be reduced to those inputs necessary to complete the mapping, such as to affirm or resolve uncertainties that result from the text parsing of symptoms, effects, and/or component names.

The example shown in the preceding figures focuses, for illustrative purposes, on combining the communication system and the electrical system design artifacts and DTC information. The invention should be understood as applying more broadly than this particular set of examples.

In another example, one or more FTA structures may also be integrated. An FTA may observe a high level fault, such as a communication systems fault, and then link to connected groupings of low level faults using Boolean logic. Thus, for example, a DTC associated with a particular failure mode at the communication system level may be linked using FTA to one or more electrical system failure modes that contribute to or directly cause the identified communication system failure mode.

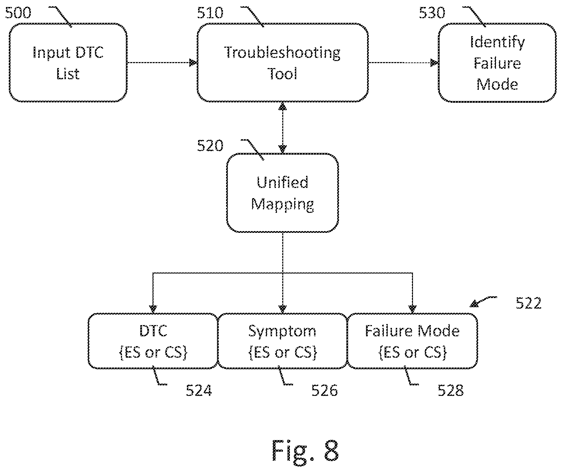

Figure 8 illustrates a method of troubleshooting. **In** this example, one or more DTCs are input at 500 to a troubleshooting tool 510. The troubleshooting tool 510 may take the form of a computer having stored instructions thereon in the form of a program that accepts as inputs the DTC list, and then references the unified mapping 520 generated as shown in Figure 7. Using the input DTC list, a plurality of associations as shown at 522 of DTC 524, symptom 526, and failure mode 528 are then flagged by the troubleshooting tool. The troubleshooting tool 510 can then identify a failure mode 530, or a plurality of failure modes 530.

If all the entered DTCs are directed to one (or more) failure mode associated with a single component, then the single component and/or failure mode can be identified at block 530. More frequently, a plurality of potential failure modes may be identified in block 530. The troubleshooting tool may be configured to present the plurality of potential failure modes and/or associated components in a prioritized listing. **In** another example, the determination of the prioritized listing may present those failure modes or components associated with the most DTCs first. **In** still another example, the design engineering documentation that is used to generate the unified mapping may have additional information integrated into the unified mapping, in particular, likelihood and/or severity ratings for given effects and/or failure modes. For example, where several potential failure modes are identified by the troubleshooting tool, the potential failure mode that is associated with the highest likelihood of occurrence, according to the FMEA, may be prioritized. In an alternative, a potential failure mode associated with the greatest severity rating may be prioritized. Additional criteria may rank potential failure modes according to the cost to troubleshoot, test, inspect, and/or repair each such mode, such as by presenting the easiest or cheapest failure modes to repair first. Other combinations of factors may be used to generate a prioritized listing if more than one potential failure mode is identified.

In some examples, the tool may also generate a list of tests, whether diagnostic or functional, to perform that may provide additional information to reduce the list of candidate failure modes. Results of such tests may be treated as "latent DTC" observations; that is, a test result may operate as a DTC incorporated in the above integration yielding the unified mapping. A determination of which tests to perform may be made using criteria such as the cost of performing a test and the likelihood that it will advance the troubleshooting analysis.

One approach to using a test as a latent DTC would be to receive a set of information (DTCs) from a system under analysis. The troubleshooting tool may identify a test to be performed that would address one or more received DTC to substantiate or disprove presence of a particular failure mode. The "latent DTC" may be built into the overall architecture by including one or more ES linkages or CS relationship chains having the latent DTC and an associated ES linkage or CS relationship chain in the set of linkages or chains developed in Figures 4 or 6, above. The test, once performed, may be used to add to the DTC listing. For example, if a test has a binary outcome ("A" or "Not A"), test results can be added as new DTCs, with a first DTC for outcome "A", and a second DTC for outcome "Not A". The newly added DTC, responsive to the test, can then be used to aid in the prioritization of potential failure modes as described above.

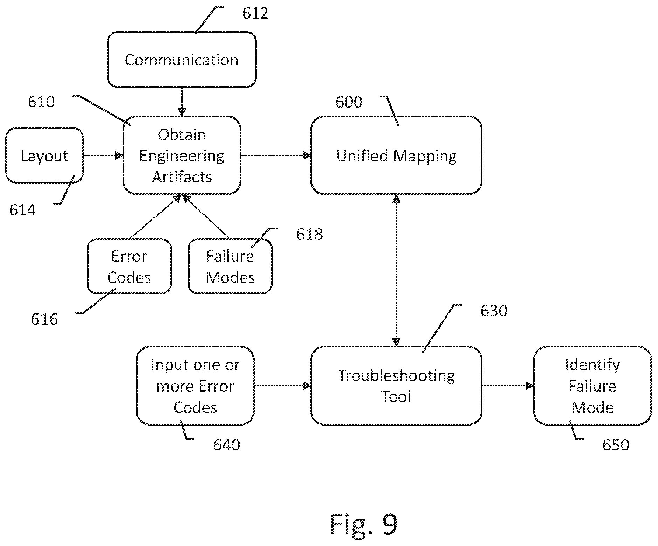

Figure 9 illustrates another method of troubleshooting. In some examples the method may be performed by a computer having stored instructions thereon in the form of a program for performing the illustrative steps shown. In this example, a unified mapping is generated at 600 by obtaining engineering artifacts 610 for one or more systems or subsystems of, for example, a vehicle or other complex system. In some examples, two or more partly overlapping systems having at least one common element may be brought together in the unified mapping. In some examples, two or more design layers for a collection of components forming a system or a subsystem may be brought together in a unified mapping. The engineering artifacts 602 may come from design specifications, quality system documentation, and/or error code knowledge. For example, engineering artifacts 610 may include documentation of the communications 612 between particular components, as well as the layout 614 of such components. Communications 612 may occur between nodes and communication lines within the system, including any available bus lines. Valves or actuators may also be electrically linked to control units such as an ECU or other controller, and these electrical connections may also be part of the layout 614. In addition, layout 614 may define mechanical interactions between components, including for example, associations within an air handling system (having valves and sensors, such as in an engine) determining the mechanical interaction of one component with another. Error codes 616 generated by components of the system may also serve as an engineering artifact 610. DTCs are one example of an error code 616 that can be treated as an engineering artifact 610. Failure modes 618 are another engineering artifact to be obtained.

The unified mapping at 600 will then be generated using, for example, methods as described above. For example, the data from each of the engineering artifact sources can be aligned by the use of text parsers, such as by matching up text, part numbers, etc., and/or expert knowledge to develop associations between individual components, assemblies, subassemblies and/or systems, informed by communication 612 and layout 614 data, to define failure modes and symptoms associated with such components and their communication-based and layout-based interactions. Finally, the error codes 616 in the system can be matched to the associations by linking error codes, symptoms, and failure modes.

The unified mapping 600 can then be made available to a troubleshooting tool 630. The troubleshooting tool 630 may take the form of a general purpose or dedicated computer having stored instruction sets for performing the steps illustratively shown. In some examples the unified mapping 600 may be maintained at a central server, and a troubleshooting tool 630 may access the central server to operate. In other examples, the unified mapping 600 may be pushed out to the troubleshooting tool 630 such as by download or software updates. Either way, the unified mapping 600 may be maintained in a manner allowing occasional (in response to an event) or periodic (at known intervals) updating of the unified mapping 600, keeping the troubleshooting tool 630 current. A user, such as a maintenance technician, can then input one or more Error Codes at 640 to the troubleshooting tool 630, and the troubleshooting tool 630 responds by identifying one or more failure modes 650 and communicating the one or more failure modes to the user. Corrective actions may be communicated along with the failure modes, as desired, to allow the user to take the appropriate corrective action.

Another example may use the troubleshooting tool differently in an online and/or predictive or preventative maintenance mode. Here, the "input" element at 640 may be performed by a monitored system, such as a vehicle, which can remotely upload error codes either as they arise or in periodic or occasional uploading processes. The troubleshooting tool 630 may be maintained as a centralized tool for a distributed fleet of systems, and may identify one or more failure modes 650. In the remote context, an identified failure mode may be used to trigger immediate maintenance, as needed. In this context, a system "malfunction" may not necessarily be disabling to the system; it may be that the identified "malfunction" is simply a need for maintenance. If immediate maintenance is not needed, the remote server may instead issue a communication for scheduling or adding to a work order the required maintenance to address the failure mode. In a still further example, the remote system may communicate to a particular vehicle in a fleet that one or more failure mode is present but does not require immediate maintenance, and DTCs associated with such a known failure mode can be ignored.

An example implementing Figure 9 may obtain first and second mappings of system components, such as a communications mapping of the system components and a layout mapping of the system components. The first and second mappings may include failure modes, error codes, and the components (and interactions thereof). More than two mappings may be integrated. The unified mapping at 600 can integrate the two input mappings using, for example, an alignment of component "names." "Names" in this context may comprise part numbers, or all or portions of component names (such as, for example, "Airflow ECU," "LIDAR Controller," "HVAC Controller," etc.). For a system designed with a unified mapping 600 as a planned feature, naming conventions may be adopted at the outset to ensure simple and automated alignment of component names. If diverse system inputs are used, such as using subsystems from different manufacturers, expert input may be used to confirm alignment of the names.

Error codes may be entered 640 to a troubleshooting tool 630 that uses the unified mapping 610 to identify one or more failure modes 650. From the identified failure modes 650, a system malfunction can be identified and linked to one or more system components. Corrective action linked to the identified failure mode 650 can then take place, such as by replacement, repair or other maintenance (cleaning, for example) of the identified one or more system components. A system "malfunction" may not necessarily be disabling; it may be that the identified "malfunction" is simply a need for maintenance.

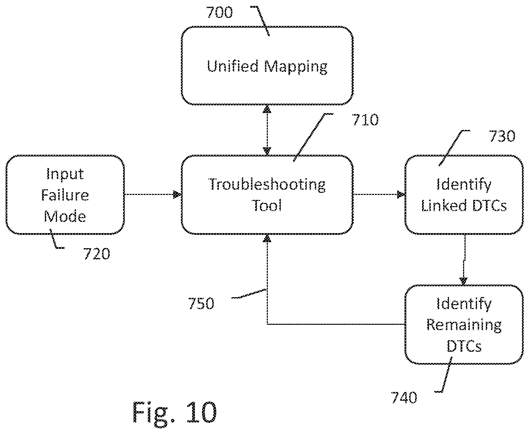

Figure 10 shows another illustrative approach. Here, a unified mapping 700 is used to enable a troubleshooting tool 710. The troubleshooting tool 710 may take the form of a computer having stored instructions thereon in the form of a program that accepts as inputs either an input failure mode and/or a DTC list. In this example, the troubleshooting tool 710 is configured to receive an input failure mode 720. The input failure mode 720 may be identified in any suitable manner, such as if a particular failure mode has been externally observed (for example and without limitation, a component failure that can be visually observed, or a failure mode identified using a method as shown in Figures 8 or 9). The troubleshooting tool 710 can then generate a list of linked DTCs 730 associated with the failure mode. Such a process may be used, for example as shown, to then eliminate the linked DTCs from a service request, with remaining DTCs identified at 740 and input again to the troubleshooting tool 710, allowing additional failure modes to be identified.

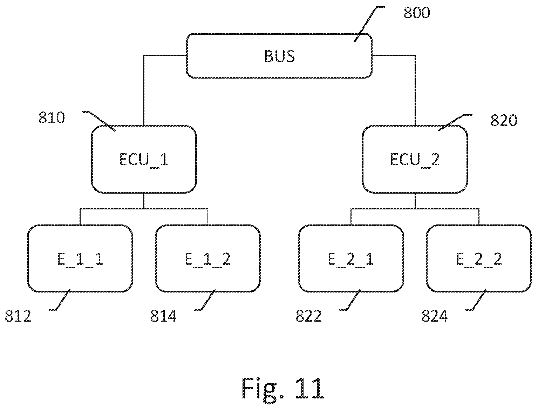

Figure 11 shows an illustrative system having a communications subsystem and an electrical subsystem. The system as shown uses a bus 800 as a backbone to the communications subsystem, and each of ECU_1 810 and ECU_2 820 are communicatively coupled to the bus 800. Each 800, 810, 820 would be part of the CS map. ECU_1 810 is coupled to plural components E_1_1 812 and E_1_2 814, which may be, for example, sensors, actuators, or other components. Likewise, ECU_2 820 is coupled to plural components E_2_1 822 and E_2_2 824. Thus each of 810, 812, 814, 820, 822, 824 would be part of the ES map.

If an error occurs with one of the electrical system components, such as E_1_1 812, this may generate a plurality of ES DTCs. The component itself and its associated ECU may generate DTCs. The ES DTCs for errors related to E_1_1 812 would typically be captured and stored at ECU_1. However, in an integrated system, assuming for example that E_1_1 is a sensor, its output may be used elsewhere in the system, such as by ECU_2 820 when issuing a command to E_2_1 822. The absence of a readable or correct reading at E_1_1 812 may cause ECU_1 to fail to issue a communication to ECU_2 via the Bus 800, creating a CS DTC for lack of an expected communication, and further, in the absence of updated data to E_2_1 822, additional ES DTCs may be generated and stored in ECU_2 820. At this point, the failure in E_1_2 814 has caused ES DTCs to be generated and stored in both ECU_1 810 and ECU_2 820, as well as one or more CS DTCs. In the prior art, a technician reviewing the DTCs at a service follow-up would need to analyze the DTCs individually to determine which are caused by what failure, where.

In contrast, with the present invention, the underlying system quality documents, including a FMEA (or an FTA) can be used to determine whether and how an ES DTC stored at ECU_2 reflects an issue arising in a different subsystem elsewhere in the overall system. Specifically, a FMEA will have documented that the affected component, E_2_1 822 could generate an error code in response to a failure to receive data from another component, E_1_1 812 in another subsystem. The present invention would also allow the CS DTC generated in the above scenario to be readily identified as related to the same underlying issue as the ES DTCs, without requiring a technician to have a mastery of the overall system architecture. As a result, the real-world technical effect of the enhancement is shown.

The example in Figure 11 is greatly simplified. In a typical system, such as an automobile, there may be as many as ten or more ECUs coupled to the bus 800, each with a dozen or more ES components coupled to each ECU. The complexity that results can be dealt with in a serial manner by the use of the relationship chains and mappings described herein to build a unified mapping, simply by building the troubleshooting tool using already existing quality system documentation.

Each of these non-limiting examples can stand on its own, or can be combined in various permutations or combinations with one or more of the other examples.

The above detailed description includes references to the accompanying drawings, which form a part of the detailed description. The drawings show, by way of illustration, specific embodiments. These embodiments are also referred to herein as "examples."

In this document, the terms "a" or "an" are used, as is common in patent documents, to include one or more than one, independent of any other instances or usages of "at least one" or "one or more." Moreover, in the claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic or optical disks, magnetic cassettes, memory cards or sticks, random access memories (RAMs), read only memories (ROMs), and the like.

The above description is intended to be illustrative, and not restrictive.

Also, in the above Detailed Description, various features may be grouped together to streamline the disclosure. This should not be interpreted as intending that an unclaimed disclosed feature is essential to any claim. Rather, innovative subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the protection should be determined with reference to the appended claims.

## Claims

1. A method of providing a troubleshooting tool for identifying and resolving a system malfunction in a system having a communications network and an electrical network, comprising:
creating, in a processor, a first mapping of communication system, CS, components, CS messages (200) exchanged by the CS components, and CS signals (240) carried by the messages; wherein at least one CS component is an electronic control unit, ECU, (150, 810, 820) and at least one CS component is a communications bus (800) coupling the ECU to additional CS components, further wherein the first mapping defines a plurality of CS symptoms (262) and CS failure modes (310) associated with the CS components, as well as an indication for each CS message of a source CS component that generates the CS message, a recipient CS component that receives the CS message, and each path CS component that the CS message would traverse when communicated by the source CS component to the recipient CS component;
for the first mapping, the processor generating a plurality of relationship chains connecting each symptom to a source CS component, a recipient CS component, and identifying each path CS component linking the source CS component to a receiving CS component;
creating a CS diagnostic trouble code, DTC, mapping a plurality of CS DTCs to the relationship chains;
creating, in the processor, a second mapping of electrical system, ES, components, connections among the ES components, ES signals generated by the ES components for receipt by an ECU, and ES failure modes, ES symptoms, and ES corrective actions for addressing the ES failure modes and their resulting ES symptoms;
for the second mapping, the processor generating a plurality of linkages associated with a plurality of ES DTCs (366) to individual ES symptoms (364) and ES failure modes (362), and identifying which ECU (368) would receive each ES DTC;
aligning component names of the first mapping with the second mapping;
generating, in the processor, a unified mapping (410) of ES DTCs and CS DTCs to ES symptoms, CS symptoms, ES components, and CS components; and
configuring the troubleshooting tool to perform as follows:
receiving a set of reported error codes;
using the unified mapping, identifying at least one system malfunction and associating the system malfunction with one or more identified system components; and
reporting to a user the one or more identified system components on which the user may operate to resolve the system malfunction.

2. The method of claim 1 wherein the step of the processor generating the plurality of relationship chains comprises matching information from the first mapping to data from a failure modes and effects analysis document for the system.

3. The method of claim 2 further comprising:
updating the failure modes and effects analysis document;
in response to updating the failure modes and effects analysis document, updating at least one of the plurality of relationship chains; and
in response to updating at least one of the plurality of relationship chains, regenerating the unified mapping.

4. The method of claim 1 wherein the step of the processor generating the plurality of linkages comprises matching information from the second mapping to data from a failure modes and effects analysis document for the system.

5. The method of claim 4 further comprising:
updating the failure modes and effects analysis document;
in response to updating the failure modes and effects analysis document, updating at least one of the plurality of linkages; and
in response to updating at least one of the plurality of linkages, regenerating the unified mapping.

6. The method of any of claims 1-5 wherein the system is a vehicle.

7. The method of any of claims 1-6 wherein the CS messages are digital messages, and the ES signals are analog signals.

8. The method of any of claims 1-7 wherein the step of identifying at least one system malfunction comprises identifying a first system malfunction, determining a subset of the received set of error codes not associated with the first system malfunction, and identifying a second system malfunction associated with the subset of the received set of error codes.

9. The method of any of claims 1-8 wherein the step of identifying at least one system malfunction comprises identifying a list of potential system malfunctions, determining a test to be performed on the system that will aid in prioritizing the list of potential system malfunctions, and recommending the test be performed.

10. The method of claim 9 wherein at least one DTC from either the CS or ES is associated with a result of the test.

11. A troubleshooting tool for a system, comprising:
a processor and memory storing a unified mapping (410) linking electrical subsystem, ES, components and communication subsystem, CS, components, connections among the ES components, connections among the CS components, failure modes (426) associated with the ES and CS components, and diagnostic trouble codes, DTCs(422), the unified mapping having been generated using a first mapping comprising CS components, CS failure modes, CS symptoms, and CS DTCs, and a second mapping comprising ES components, ES failure modes (362), ES symptoms (364), and ES DTCs (366);
wherein the processor is configured to:
receive a set of DTCs;
reference the unified mapping using the set of DTCs; and
identify and report to a user a component failure related to the set of DTCs.

12. The troubleshooting tool of claim 11 wherein the processor is further configured to receive an input component failure mode and, in response thereto, to identify within the set of DTCs which DTCs relate to the input component failure mode.

13. The troubleshooting tool of claim 12 wherein the processor is further configured to:
analyze the set of DTCs;
determine whether any DTCs are not related to the input component failure mode; and
if one or more of the DTCs in the set of DTCS are not related to the input component failure mode, identify at least one additional possible failure for any DTCs that do not relate to the identified failure.

14. The troubleshooting tool of any of claims 11-13 wherein the unified mapping is generated using a system failure modes and effects analysis (FMEA) document by linking the DTCs of each of the CS and ES components to failure modes identified in the FMEA document.

15. The troubleshooting tool of any of claims 11-14, wherein the processor is further configured identify and report to a user a component failure related to the set of DTCs by:
identifying a first component failure associated with a first subset of the set of DTCs;
identifying a second subset of the set of DTCs not associated with the first component failure; and
identifying a second component failure associated with the second subset of the set of DTCs.

16. The troubleshooting tool of any of claims 11-15 wherein the processor is further configured identify and report to a user a component failure related to the set of DTCs by:
identifying a list of potential failures based on the set of DTCs;
determining a test to be performed on the system that will aid in prioritizing the list of potential failures; and
recommending the test be performed.

17. The troubleshooting tool of claim 16 wherein at least one test DTC from either the CS or ES is associated with a result of the test, and the processor is configured to add the at least one test DTC to the set of DTCs in response to a result of the test.

18. The troubleshooting tool of any of claims 11-17 wherein the system is a vehicle.

## Patentansprüche

1. Verfahren zum Bereitstellen eines Tools zur Fehlerbehebung zum Identifizieren und Beheben eines Systemfehlers in einem System, das ein Kommunikationsnetzwerk und ein Stromnetz aufweist, umfassend:
Erstellen einer ersten Zuordnung von Kommunikationssystem, CS,-Komponenten, von CS-Nachrichten (200), die von den CS-Komponenten ausgetauscht werden, und von CS-Signalen (240), die von den Nachrichten übertragen werden, in einem Prozessor; wobei mindestens eine CS-Komponente eine elektronische Steuereinheit, ECU, (150, 810, 820) ist und mindestens eine CS-Komponente ein Kommunikationsbus (800) ist, der die ECU mit zusätzlichen CS-Komponenten koppelt, wobei ferner die erste Zuordnung eine Vielzahl von CS-Symptomen (262) und CS-Fehlermodi (310), die mit den CS-Komponenten verbunden sind, sowie eine Angabe für jede CS-Nachricht einer Quell-CS-Komponente, die die CS-Nachricht erzeugt, eine Empfänger-CS-Komponente, die die CS-Nachricht empfängt, und jede Pfad-CS-Komponente definiert, die die CS-Nachricht durchlaufen würde, wenn sie von der Quell-CS-Komponente an die Empfänger-CS-Komponente übermittelt werden würde;
wobei der Prozessor für die erste Zuordnung eine Vielzahl von Beziehungsketten erzeugt, die jedes Symptom mit einer Quell-CS-Komponente und einer Empfänger-CS-Komponente verbinden und jede Pfad-CS-Komponente identifizieren, die die Quell-CS-Komponente mit einer empfangenden CS-Komponente verknüpft;
Erstellen eines CS-Diagnose-Fehlercodes, DTC, der eine Vielzahl von CS-DTCs den Beziehungsketten zuordnet;
Erstellen einer zweiten Zuordnung von Komponenten des elektrischen Systems, ES-Komponenten, von Verbindungen zwischen den ES-Komponenten, von ES-Signalen, die von den ES-Komponenten zum Empfang durch eine ECU erzeugt werden, und von ES-Fehlermodi, ES-Symptomen und ES-Korrekturmaßnahmen zur Lösung der ES-Fehlermodi und ihrer daraus resultierenden ES-Symptome im Prozessor;
wobei der Prozessor für die zweite Zuordnung eine Vielzahl von Verknüpfungen, die mit einer Vielzahl von ES-DTCs (366) verbunden sind, mit einzelnen ES-Symptomen (364) und ES-Fehlermodi (362) erzeugt und identifiziert, welche ECU (368) jeden ES-DTC empfangen würde;
Abgleichen der Komponentennamen der ersten Zuordnung mit der zweiten Zuordnung;
Erzeugen einer einheitlichen Zuordnung (410) von ES-DTCs und CS-DTCs zu ES-Symptomen, CS-Symptomen, ES-Komponenten und CS-Komponenten im Prozessor; und
Konfigurieren des Tools zur Fehlerbehebung, so dass es Folgendes durchführt:
Empfangen eines Satzes gemeldeter Fehlercodes;
Identifizieren mindestens eines Systemfehlers unter Verwendung der einheitlichen Zuordnung und Verbinden des Systemfehlers mit einer oder mehreren identifizierten Systemkomponenten; und
Melden der einen oder mehreren identifizierten Systemkomponenten, an denen ein Benutzer arbeiten kann, um den Systemfehler zu beheben, an den Benutzer.

2. Verfahren nach Anspruch 1, wobei der Schritt des Erzeugens der Vielzahl von Beziehungsketten durch den Prozessor das Abgleichen von Informationen aus der ersten Zuordnung mit Daten aus einem Fehlermöglichkeits- und Einflussanalyse-Dokument für das System umfasst.

3. Verfahren nach Anspruch 2, ferner umfassend:
Aktualisieren des Fehlermöglichkeits- und Einflussanalyse-Dokuments;
als Reaktion auf das Aktualisieren des Fehlermöglichkeits- und Einflussanalyse-Dokuments, Aktualisieren mindestens einer der Vielzahl von Beziehungsketten; und
als Reaktion auf das Aktualisieren mindestens einer der Vielzahl von Beziehungsketten, erneutes Erzeugen der einheitlichen Zuordnung.

4. Verfahren nach Anspruch 1, wobei der Schritt des Erzeugens der Vielzahl von Verknüpfungen durch den Prozessor das Abgleichen von Informationen aus der zweiten Zuordnung mit Daten aus einem Fehlermöglichkeits- und Einflussanalyse-Dokument für das System umfasst.

5. Verfahren nach Anspruch 4, ferner umfassend:
Aktualisieren des Fehlermöglichkeits- und Einflussanalyse-Dokuments;
als Reaktion auf das Aktualisieren des Fehlermöglichkeits- und Einflussanalyse-Dokuments, Aktualisieren mindestens einer der Vielzahl von Verknüpfungen; und
als Reaktion auf das Aktualisieren mindestens einer der mehreren Verknüpfungen, erneutes Erzeugen der einheitlichen Zuordnung.

6. Verfahren nach einem der Ansprüche 1-5, wobei das System ein Fahrzeug ist.

7. Verfahren nach einem der Ansprüche 1-6, wobei die CS-Nachrichten digitale Nachrichten sind und die ES-Signale analoge Signale sind.

8. Verfahren nach einem der Ansprüche 1-7, wobei der Schritt des Identifizierens mindestens eines Systemfehlers das Identifizieren eines ersten Systemfehlers, das Bestimmen einer Teilmenge des empfangenen Satzes von Fehlercodes, die nicht mit dem ersten Systemfehler verbunden ist, und das Identifizieren eines zweiten Systemfehlers, der mit der Teilmenge des empfangenen Satzes von Fehlercodes verbunden ist, umfasst.

9. Verfahren nach einem der Ansprüche 1-8, wobei der Schritt des Identifizierens mindestens eines Systemfehlers das Identifizieren einer Liste potenzieller Systemfehler, das Bestimmen eines an dem System durchzuführenden Tests, der bei der Priorisierung der Liste potenzieller Systemfehler hilft, und das Empfehlen des Durchführens des Tests umfasst.

10. Verfahren nach Anspruch 9, wobei mindestens ein DTC entweder aus dem CS oder dem ES mit einem Ergebnis des Tests verbunden ist.

11. Tool zur Fehlerbehebung für ein System, umfassend:
einen Prozessor und einen Speicher, der eine einheitliche Zuordnung (410) speichert, die elektrische Subsystem, ES,-Komponenten und Kommunikationssubsystem, CS,-Komponenten, Verbindungen zwischen den ES-Komponenten, Verbindungen zwischen den CS-Komponenten, Fehlermodi (426), die mit den ES- und CS-Komponenten verbunden sind, und Diagnose-Fehlercodes, DTCs, (422) miteinander verknüpft, wobei die einheitliche Zuordnung unter Verwendung einer ersten Zuordnung, die CS-Komponenten, CS-Fehlermodi, CS-Symptome und CS-DTCs umfasst, und einer zweiten Zuordnung, die ES-Komponenten, ES-Fehlermodi (362), ES-Symptome (364) und ES-DTCs (366) umfasst, erzeugt wurde;
wobei der Prozessor für Folgendes konfiguriert ist:
Empfangen eines Satzes von DTCs;
Verweisen auf die einheitliche Zuordnung unter Verwendung des Satzes von DTCs; und
Identifizieren eines Komponentenausfalls in Bezug auf den Satz von DTCs und Melden dieses an einen Benutzer.

12. Tool zur Fehlerbehebung nach Anspruch 11, wobei der Prozessor ferner so konfiguriert ist, dass er einen eingegebenen Komponentenausfallmodus empfängt und als Reaktion darauf innerhalb des Satzes von DTCs identifiziert, welche DTCs mit dem eingegebenen Komponentenausfallmodus im Zusammenhang stehen.

13. Tool zur Fehlerbehebung nach Anspruch 12, wobei der Prozessor ferner für Folgendes konfiguriert ist:
Analysieren des Satzes von DTCs;
Bestimmen, ob DTCs nicht mit dem eingegebenen Komponentenausfallmodus in Zusammenhang stehen; und
wenn einer oder mehrere der DTCs im Satz von DTCs nicht mit dem eingegebenen Komponentenausfallmodus in Zusammenhang stehen, Identifizieren mindestens eines zusätzlichen möglichen Fehlers für alle DTCs, die nicht mit dem identifizierten Fehler in Zusammenhang stehen.

14. Tool zur Fehlerbehebung nach einem der Ansprüche 11-13, wobei die einheitliche Zuordnung unter Verwendung eines Fehlermöglichkeits- und Einflussanalyse(FMEA)-Dokuments erzeugt wird, indem die DTCs jeder der CS- und ES-Komponenten mit den im FMEA-Dokument identifizierten Fehlermodi verknüpft werden.

15. Tool zur Fehlerbehebung nach einem der Ansprüche 11-14, wobei der Prozessor ferner so konfiguriert ist, dass er durch Folgendes einen Komponentenausfall im Zusammenhang mit dem Satz von DTCs identifiziert und einem Benutzer meldet:
Identifizieren eines ersten Komponentenausfalls, der mit einer ersten Teilmenge des Satzes von DTCs verbunden ist;
Identifizieren einer zweiten Teilmenge des Satzes von DTCs, die nicht mit dem ersten Komponentenausfall verbunden ist; und
Identifizieren eines zweiten Komponentenausfalls, der mit der zweiten Teilmenge des Satzes von DTCs verbunden ist.

16. Tool zur Fehlerbehebung nach einem der Ansprüche 11-15, wobei der Prozessor ferner so konfiguriert ist, dass er durch Folgendes einen mit dem Satz von DTCs verbundenen Komponentenausfall identifiziert und einem Benutzer meldet:
Identifizieren einer Liste potenzieller Ausfälle basierend auf dem Satz von DTCs;
Bestimmen eines an dem System durchzuführenden Tests, der bei der Priorisierung der Liste potenzieller Ausfälle hilft; und
Empfehlen des Durchführens des Tests.

17. Tool zur Fehlerbehebung nach Anspruch 16, wobei mindestens ein Test-DTC entweder aus dem CS oder dem ES mit einem Ergebnis des Tests verbunden ist und der Prozessor so konfiguriert ist, dass er den mindestens einen Test-DTC als Reaktion auf ein Ergebnis des Tests zum Satz von DTCs hinzufügt.

18. Tool zur Fehlerbehebung nach einem der Ansprüche 11-17, wobei das System ein Fahrzeug ist.

## Revendications

1. Procédé de fourniture d'un outil de dépannage pour l'identification et la résolution d'un dysfonctionnement de système dans un système ayant un réseau de communication et un réseau électrique, comprenant :
la création, dans un processeur, d'une première cartographie de composants du système de communication, CS, de messages CS (200) échangés par les composants CS et de signaux CS (240) portés par les messages ; dans lequel au moins un composant CS est une unité de commande électronique, ECU, (150, 810, 820) et au moins un composant CS est un bus de communication (800) reliant l'ECU à des composants CS additionnels, dans lequel, en outre, la première cartographie définit une pluralité de symptômes CS (262) et de modes de défaillance CS (310) associés aux composants CS, ainsi qu'une indication pour chaque message CS d'un composant CS source qui génère le message CS, d'un composant CS récepteur qui reçoit le message CS, et chaque composant CS de cheminement que le message CS traverse lorsqu'il est communiqué par le composant CS source au composant CS récepteur ;
pour la première cartographie, le processeur génère une pluralité de chaînes de relations reliant chaque symptôme à un composant CS source, un composant CS récepteur et identifie chaque composant CS de cheminement liant le composant CS source à un composant CS récepteur ;
la création d'un code de diagnostic d'anomalie, DTC, la cartographie d'une pluralité de DTC CS vers les chaînes de relations ;
la création, dans le processeur, d'une seconde cartographie de composants du système électrique, ES, de connexions entre les composants ES, de signaux ES générés par les composants ES pour réception par un ECU, et de modes de défaillance ES, de symptômes ES et d'actions correctives ES pour résoudre les modes de défaillance ES et les symptômes ES qui en résultent ;
pour la seconde cartographie, le processeur génère une pluralité de liens associés à une pluralité de DTC ES (366) avec des symptômes ES individuels (364) et des modes de défaillance ES (362), et identifie quel ECU (368) recevra chaque DTC ES ;
l'alignement de noms de composants de la première cartographie avec la seconde cartographie ;
la génération, dans le processeur, d'une cartographie unifiée (410) de DTC ES et de DTC CS vers des symptômes ES, des symptômes CS, des composants ES et des composants CS ; et
la configuration de l'outil de dépannage pour qu'il fonctionne comme suit :
recevoir un ensemble de codes d'erreur rapportés ;
utiliser la cartographie unifiée, identifier au moins un dysfonctionnement du système et associer le dysfonctionnement du système à un ou plusieurs composants système identifiés ; et
rapporter à un utilisateur l'un ou les plusieurs composants système identifiés sur lesquels l'utilisateur peut intervenir pour résoudre le dysfonctionnement du système.

2. Procédé selon la revendication 1, dans lequel l'étape du processeur générant la pluralité de chaînes de relations comprend le rapprochement des informations de la première cartographie avec des données d'un document d'analyse des modes de défaillances et de leurs effets sur le système.

3. Procédé selon la revendication 2, comprenant en outre :
la mise à jour du document d'analyse des modes de défaillances et de leurs effets ;
en réponse à la mise à jour du document d'analyse des modes de défaillances et de leurs effets, la mise à jour d'au moins une de la pluralité de chaînes de relations ; et
en réponse à la mise à jour de l'au moins une de la pluralité de chaînes de relations, la régénération de la cartographie unifiée.

4. Procédé selon la revendication 1, dans lequel l'étape du processeur générant la pluralité de liens comprend le rapprochement des informations de la seconde cartographie avec des données d'un document d'analyse des modes de défaillances et de leurs effets sur le système.

5. Procédé selon la revendication 4, comprenant en outre :
la mise à jour du document d'analyse des modes de défaillances et de leurs effets ;
en réponse à la mise à jour du document d'analyse des modes de défaillances et de leurs effets, la mise à jour d'au moins un de la pluralité de liens ; et
en réponse à la mise à jour de l'au moins un de la pluralité de liens, la régénération de la cartographie unifiée.

6. Procédé selon l'une des revendications 1-5, dans lequel le système est un véhicule.

7. Procédé selon l'une des revendications 1-6, dans lequel les messages CS sont des messages numériques et les signaux ES sont des signaux analogiques.

8. Procédé selon l'une des revendications 1-7, dans lequel l'étape d'identification d'au moins un dysfonctionnement du système comprend l'identification d'un premier dysfonctionnement du système, la détermination d'un sous-ensemble de l'ensemble de codes d'erreur reçus non associés avec le premier dysfonctionnement du système, et l'identification d'un second dysfonctionnement du système associé au sous-ensemble de l'ensemble de codes d'erreur reçus.

9. Procédé selon l'une des revendications 1-8, dans lequel l'étape d'identification d'au moins un dysfonctionnement du système comprend l'identification d'une liste de dysfonctionnements potentiels du système, la détermination d'un test à effectuer sur le système qui aidera à prioriser la liste de dysfonctionnements potentiels du système, et la recommandation du test à effectuer.

10. Procédé selon la revendication 9, dans lequel au moins un DTC provenant soit du CS, soit du ES est associé à un résultat du test.

11. Outil de dépannage pour un système, comprenant :
un processeur et une mémoire stockant une cartographie unifiée (410) reliant des composants du sous-système électrique, ES, et des composants du sous-système de communication, CS, des connexions entre les composants ES, des connexions entre les composants CS, des modes de défaillance (426) associés aux composants ES et CS et des codes de diagnostic d'anomalie, DTC (422), la cartographie unifiée ayant été générée en utilisant une première cartographie comprenant des composants CS, des modes de défaillance CS, des symptômes CS et des DTC CS, et une seconde cartographie comprenant des composants ES, des modes de défaillance ES (362), des symptômes ES (364) et des DTC ES (366) ;
dans lequel le processeur est configuré pour :
recevoir un ensemble de DTC ;
référencer la cartographie unifiée en utilisant l'ensemble de DTC ; et
identifier et rapporter à un utilisateur une défaillance de composant associée à l'ensemble de DTC.

12. Outil de dépannage selon la revendication 11, dans lequel le processeur est en outre configuré pour recevoir un mode de défaillance des composants d'entrée et, en réponse à cela, identifier dans l'ensemble de DTC quels DTC sont associés au mode de défaillance des composants d'entrée.

13. Outil de dépannage selon la revendication 12, dans lequel le processeur est en outre configuré pour :
analyser l'ensemble de DTC ;
déterminer si certains DTC ne sont pas associés au mode de défaillance des composants d'entrée ; et
si un ou plusieurs DTC de l'ensemble de DTC ne sont pas associés au mode de défaillance des composants d'entrée, identifier au moins une défaillance additionnelle possible pour tout DTC qui n'est pas associé à la défaillance identifiée.

14. Outil de dépannage selon l'une des revendications 11-13, dans lequel la cartographie unifiée est générée en utilisant un document d'analyse des modes de défaillances et de leurs effets sur le système (AMDE) en liant les DTC de chacun des composants CS et ES à des modes de défaillance identifiés dans le document AMDE.

15. Outil de dépannage selon l'une des revendications 11-14, dans lequel le processeur est en outre configuré pour identifier et rapporter à un utilisateur une défaillance de composant associée à l'ensemble de DTC en :
identifiant une première défaillance de composant associée à un premier sous-ensemble de l'ensemble de DTC ;
identifiant un second sous-ensemble de l'ensemble de DTC non associé à la première défaillance de composant ; et
identifiant une seconde défaillance de composant associée au second sous-ensemble de l'ensemble de DTC.

16. Outil de dépannage selon l'une des revendications 11-15, dans lequel le processeur est en outre configuré pour identifier et rapporter à un utilisateur une défaillance de composant associée à l'ensemble de DTC en :
identifiant une liste de défaillances potentielles basée sur l'ensemble de DTC ;
déterminant un test à effectuer sur le système qui aidera à prioriser la liste de défaillances potentielles ; et
recommandant l'exécution du test.

17. Outil de dépannage selon la revendication 16, dans lequel au moins un DTC test provenant soit du CS, soit du ES est associé à un résultat du test, et le processeur est configuré pour ajouter l'au moins un DTC test à l'ensemble de DTC en réponse à un résultat du test.

18. Outil de dépannage selon l'une des revendications 11-17, dans lequel le système est un véhicule.
